## Europäisches Patentamt
## European Patent Office
## Office européen des brevets

(19)

(11) Veröffentlichungsnummer : **0 046 845**
**B1**

(12)

# EUROPÄISCHE PATENTSCHRIFT

(45) Veröffentlichungstag der Patentschrift :
11.12.85

(51) Int. Cl.⁴ : **F 16 H   5/80, F 16 H 57/06**

(21) Anmeldenummer : 81104062.5

(22) Anmeldetag : 27.05.81

(54) Halbautomatische Getriebesteuerung.

(30) Priorität : 28.08.80 DE 3032403

(43) Veröffentlichungstag der Anmeldung :
10.03.82 Patentblatt 82/10

(45) Bekanntmachung des Hinweises auf die Patenterteilung : 11.12.85 Patentblatt 85/50

(84) Benannte Vertragsstaaten :
AT CH DE FR GB IT LI NL SE

(56) Entgegenhaltungen :
DE-A- 1 450 694
DE-A- 1 946 219
DE-A- 2 215 994
DE-A- 2 502 445
FR-A- 2 287 359
GB-A- 1 556 871
GB-A- 2 019 509
US-A- 3 845 674

(73) Patentinhaber : WABCO Westinghouse Fahrzeugbremsen GmbH
Am Lindener Hafen 21 Postfach 91 12 80
D-3000 Hannover 91 (DE)

(72) Erfinder : Klatt, Alfred
Dannhorstweg 2
D-3101 Wathlingen (DE)

(74) Vertreter : Schrödter, Manfred
WABCO Westinghouse Fahrzeugbremsen GmbH Am
Lindener Hafen 21 Postfach 91 12 80
D-3000 Hannover 91 (DE)

EP 0 046 845 B1

## Beschreibung

Die Erfindung bezieht sich auf eine halbautomatische Getriebesteuerung nach dem Oberbegriff des Patentanspruchs 1.

Es ist für die Zukunft zu erwarten, daß bei Straßenfahrzeugen nach der Bremsanlage und der Lenkung auch die Gangschalteinrichtung in steigendem Maße von direkter Betätigung auf hilfskraftunterstützte Betätigung umgestellt wird. Der geringste Bedienungsaufwand ergibt sich dabei für automatische Getriebe. Diese Bauart weist jedoch, besonders im Hinblick auf ihren Einsatz in Lastkraftwagen, einige Nachteile auf. So erfordern automatische Stufengetriebe bekanntlich einen beträchtlichen Kraftstoffmehrverbrauch, der sich bei den hohen Kilometerleistungen von Lastkraftwagen besonders bemerkbar macht. Weiterhin werden beim Einsatz eines automatischen Getriebes das Gewicht und die Kosten des Getriebes erheblich erhöht.

Schließlich ist das Schaltverhalten eines automatischen Getriebes, da nicht direkt vom Fahrer beeinflußbar, nicht immer optimal der jeweiligen Verkehrssituation angepaßt.

Mehr Einflußmöglichkeiten für den Fahrer ergeben sich, wenn lediglich die Gangbetätigung nicht direkt, sondern servounterstützt erfolgt. Dabei ergibt sich weiter die Möglichkeit, die Gänge nicht wie allgemein üblich in H-Form, sondern linear hintereinander liegend anzuordnen. Hierdurch läßt sich, besonders bei der großen Zahl von Gängen bei Lastkraftwagen, der gewünschte Gang leichter finden.

Eine Gefahr für den Motor eines Lastkraftwagens liegt darin, daß der Fahrer versehentlich in einen zu kleinen Gang herunterschalten kann. Hierdurch kann der Motor überdreht werden. Dies kann z. B. dann passieren, wenn ein oder mehrere Gänge übersprungen werden, was jedoch in anderen Situationen auch zulässig sein kann.

Die Motordrehzahl, bei der der Motor überdreht und zerstört wird, kann z. B. einem Lastwagen bei 3 500 Upm liegen. Die maximal zulässige Drehzahl liegt z. B. bei 3 100 Upm. Die Nenndrehzahl liegt bei 2 400 Upm. Die obere Grenze eines « optimalen » Drehzahlbereichs liegt bei ca. 70 % bis 100 % der Nenndrehzahl.

Auch das Heraufschalten in einen zu hohen Gang ist ungünstig, da hierdurch, insbesondere an Steigungen, die Zugkraft der Maschine zu stark abnimmt.

Aus der DE-PS 22 15 994, die die Merkmale aus dem Oberbegriff des Anspruchs 1 als bekannt ausweist, ist bereits ein Getriebesteuerschalter bekannt, welcher Sperrvorrichtungen gegen unerlaubte Schaltungen aufweist. Bei diesem ist es jedoch nicht möglich, Gänge zu überspringen.

Der Erfindung liegt die Aufgabe zugrunde, eine Getriebesteuerung anzugeben, durch welche die obengenannten Fehlschaltungen vehindert werden. Darüberhinaus soll es möglich sein, daß der Fahrer beim Schalten mehrere Gänge bis zum Erreichen des optimalen Ganges überspringt.

Diese Aufgabe wird durch die im Patentanspruch 1 enthaltene Erfindung gelöst.

Vorteilhafte Weiterbildungen der Erfindung sind in den abhängigen Ansprüchen 2-10 aufgeführt.

Die Erfindung wird im folgenden anhand eines Ausführungsbeispiels näher erläutert.

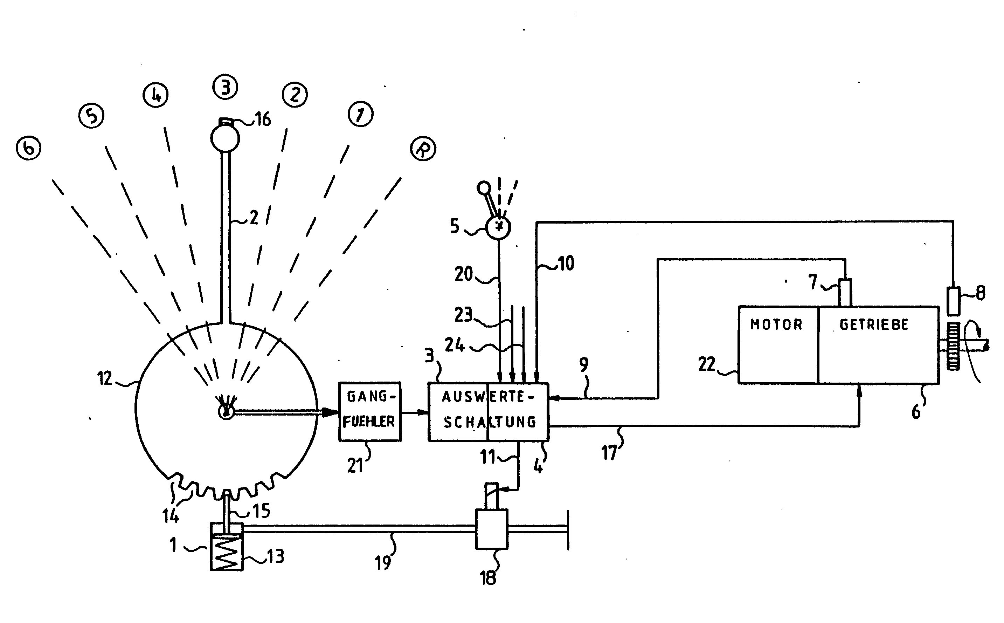

Die Zeichnung zeigt ein Blockschaltbild einer erfindungsgemäßen Getriebesteuerung. Diese besteht im wesentlichen aus einem Schalthebel 2, einer Sperrvorrichtung 1, einem Gangfühler 21, einer Auswerteschaltung 3, einem Fahrprogrammwähler, einem Motor 22 mit angebautem Getriebe 6, einem Gangrückmelder 7 und einem Sensor 8 zur Messung der Getriebeausgangsdrehzahl.

Der Schalthebel 2 weist an seinem Drehpunkt eine Scheibe 12 auf, welche am Rand mit Nuten 14 versehen ist. In die Nuten 14 kann ein Stift 15 eines druckmittelbetätigten, federbelasteten Arbeitszylinders 13 eingreifen und so den Schalthebel 2 verriegeln.

Anstelle des Arbeitszylinders 13 kann z. B. auch ein Arbeitsmagnet (nicht dargestellt) verwendet werden. Dieser erlaubt eine besonders schnelle Betätigung.

Die jeweilige Stellung des Schalthebels 2 wird von einem Gangfühler 21 abgetastet und in kodierter Form in eine Auswerteschaltung 3 weitergegeben. Der Schalthebel 2 kann z. B. die Positionen R (Rückwärtsgang) und 1-6 (Vorwärtsgänge) einnehmen. Es sind jedoch auch wesentlich mehr Gänge möglich. Die Gänge liegen linear hintereinander, und sind durch Rasten markiert.

Die Auswerteschaltung 3 gibt über eine Leitung 17 Signale an das Getriebe 6 weiter, wodurch die hilfskraftbetätigte Einschaltung des gewünschten Ganges bewirkt wird. Zur Einschaltung der Gänge können hydraulische oder pneumatische Arbeitszylinder, Arbeitsmagnete oder Elektromotoren verwendet werden.

Innerhalb der Auswerteschaltung 3 ist weiterhin eine Elektronik 4 angeordnet. Dieser werden über die Eingänge 9 und 10 die Ausgangssignale des Sensors 8 und des Gangrückmelders 7 zugeführt. Dabei erfaßt der Sensor 8 die Getriebeausgangsdrehzahl. Der Elektronik 4 wird weiterhin über einen Eingang 20 ein Signal eines Fahrprogrammwählers 5 zugeführt. Das Ausgangssignal (Ausgang 11) der Elektronik 4 wird einem Magnetventil 18 zugeführt, welches eine zum Arbeitszylinder 13 führende Druckmittelleitung 19 von einem Druckmittelvorrat (nicht dargestellt) absperrt.

Die Elektronik 4, welche z. B. einen für unterschiedliche Fahrzeuge leicht umprogrammierbaren Mikrocomputer enthalten kann, wertet die obengenannten Eingangsinformationen aus. Über den Ausgang 11 bewirkt die Elektronik 4 mittels der Sperrvorrichtung 1 immer dann eine Sperrung des Schalthebels 2, wenn der Fahrer einen Gang einlegen will, welcher eine Motordrehzahl erfordert, die außerhalb eines « optimalen » Motordrehzahlbereichs liegt. Der optimale Motordrehzahlbereich ist in einem Programm des Mikrocomputers in der Elektronik 4 gespeichert. Die obere Grenze des optimalen Drehzahlbereichs liegt bei 70 % bis 100 % der Nenndrehzahl.

Durch diese Wirkung der Elektronik 4 wird somit verhindert, daß versehentlich ein Gang eingelegt wird, durch welchen eine zu hohe oder zu niedrige Motordrehzahl bewirkt würde. Es ist für den Fahrer möglich, den Schalthebel 2 einfach soweit zu bewegen, bis die Sperrvorrichtung 1 eingreift. Hierbei ist vorteilhaft auch das Überspringen eines oder mehrerer Gänge möglich.

In einer weiteren Ausgestaltung der Erfindung ist am Schalthebel 2 ein Schalter 16 befestigt. Mit diesem kann die Sperrvorrichtung 1 bei Bedarf auch abgeschaltet werden.

Der weiter mit der Elektronik 4 verbundene Fahrprogrammwähler 5 dient dazu, die Elektronik 4 auf verschiedene Fahrprogramme einstellen zu können. Solche Fahrprogramme können beispielsweise speziell auf eine gewünschte Fahrweise, wie « zügig » oder « ökonomisch », auf eine vorgegebene Durchschnittsgeschwindigkeit, oder auf den Beladungszustand des Fahrzeugs, wie « leer » oder « beladen », ausgerichtet sein. Das Fahrprogramm « leer » bewirkt dann beispielsweise die Sperrung jedes zweiten Ganges, da diese Zwischengänge für die Beschleunigung des leeren Fahrzeugs nicht notwendig sind. Außerdem ist das Fahrprogramm « maximal zulässige Motordrehzahl » vorhanden.

Der Schalter 16 kann auch dazu dienen, das Fahrprogramm « maximal zulässige Motordrehzahl » einzuschalten. In diesem Fall ist der Schalter 16 als Taster ausgebildet. Nach Beendigung der Betätigung des Tasters, wird wieder auf das am Fahrprogrammwähler 5 eingestellte Fahrprogramm zurückgeschaltet.

In dem Fahrprogramm « zügig » wird der Schalthebel 2 dann gesperrt, wenn sich beim Schalten eine Drehzahl ergeben würde, welche 100 % der Nenndrehzahl überschreitet.

In dem Fahrprogramm « ökonomisch » erfolgt die Sperrung, wenn 70 % der Nenndrehzahl überschritten würde.

Fährt der Fahrer in einem Gang an der Grenze der optimalen Motordrehzahl und beabsichtigt er, noch einen Gang weiter herunter- oder heraufzuschalten, was von dem Mikrocomputer durch das Betätigen der Kupplung registriert werden kann, dann wird diese Schaltung aus dem optimalen Bereich heraus, aber noch innerhalb des maximal zulässigen Bereiches, und nur für einen Gangsprung zugelassen. Man kann in einem solchen Fall davon ausgehen, daß der Fahrer einen berechtigten Grund hat, noch einen Gang weiterzuschalten. Diese Überschreitung des optimalen Drehzahlbereiches ist jedoch nur zulässig, wenn vorher die Kupplung eingerückt war.

Anstelle durch den Fahrprogrammwähler 5 kann eine Information über den Zustand des Fahrzeugs, z. B. über die Beladung und die Gaspedalstellung, auch über (nicht dargestellte) Sensoren erfaßt werden. Die Signale dieser Sensoren werden der Elektronik 4 über weitere Eingänge 23, 24 zugeführt. Die Signale bewirken dann entsprechend die Auswahl bestimmter, gespeicherter Fahrprogramme.

Durch die oben beschriebene erfindungsgemäße Getriebesteuerung werden Fehlbedienungen der Gangschaltung durch den Fahrer verhindert. Hierdurch wird die Führung des Fahrzeugs vereinfacht und sicherer gemacht. Ein besonderer Vorteil liegt darin, daß der Fahrer den Schalthebel soweit bewegen kann, bis die Sperrvorrichtung eine weitere Bewegung verhindert. Damit ist dann der dem jeweiligen Fahrzustand zugehörige optimale Gang eingeschaltet.

**Patentansprüche**

1. Halbautomatische Getriebesteuerung für Stufengetriebe, insbesondere für Lastkraftwagen, mit einem Schalthebel (2) zum Einstellen der Gänge, einem Gangfühler (21) zum Erkennen des eingestellten Ganges und zur elektronischen Kodierung dieses Ganges und mit einer Auswerteschaltung (3), welche ein hilfskraftunterstütztes Einlegen der Gänge im Getriebe bewirkt, und einer Sperrvorrichtung (1) für den Schalthebel (2), gekennzeichnet durch folgende Merkmale :

a) einen Gangrückmelder (7) zur Kontrolle der Gangumschaltung,

b) einen Sensor (8) zur Aufnahme der Getriebeausgangsdrehzahl,

c) eine der Auswerteschaltung (3) zugeordnete Elektronik (4), deren Eingänge (9, 10) über den Gangrückmelder (7) und den Sensor (8) Signale über den Antriebszustand erhalten und deren Ausgang (11) die Sperrvorrichtung (1) dann betätigt, wenn die Ausgangssignale des Gangfühlers (21) und des Sensors (8) einer Motordrehzahl entspricht, welche außerhalb eines durch die Elektronik vorbestimmten optimalen Motordrehzahlbereichs liegt, wobei die Sperrvorrichtung (1) die Bewegung des Schalthebels in einer durch die Elektronik (4) bestimmten Schaltstellung sperrt und der dieser Schaltstellung zugeordnete optimale Gang eingelegt wird.

2. Getriebesteuerung nach Anspruch 1, dadurch gekennzeichnet, daß die Sperrvorrichtung (1) folgende Merkmale aufweist :

a) Eine am Schalthebel (2) befestigte Scheibe (12), die am Rand Nuten (14) aufweist,

b) einen druckmittelbetätigten, federbelasteten Arbeitszylinder (13) zur Einführung eines Stiftes (15) in die Nuten (14).

3. Getriebesteuerung nach Anspruch 2, dadurch gekennzeichnet, daß an Stelle des Arbeitszylinders (13) ein Arbeitsmagnet verwendet wird.

4. Getriebesteuerung nach Anspruch 1, dadurch gekennzeichnet, daß die Funktion der Sperrvorrichtung (1) durch einen am Schalthebel (2) befestigten Schalter (16) ausschaltbar ist.

5. Getriebesteuerung nach Anspruch 1, dadurch gekennzeichnet, daß ein weiterer Eingang (20) der Elektronik (4) an einen Fahrprogrammwähler (5) angeschlossen ist, mit welchem verschiedene in der Elektronik (4) gespeicherte Fahrprogramme anwählbar sind.

6. Getriebesteuerung nach Anspruch 5, dadurch gekennzeichnet, daß die Fahrprogramme « zügig », « ökonomisch », « leer », « beladen » und/oder « maximal zulässige Motordrehzahl » anwählbar sind.

7. Getriebesteuerung nach Anspruch 1 bis 4, dadurch gekennzeichnet, daß der Elektronik (4) über weitere Eingänge (23, 24) Informationen über die Beladung und die Gaspedalstellung zugeführt werden.

8. Getriebesteuerung nach einem oder mehreren der Ansprüche 1 bis 7, dadurch gekennzeichnet, daß durch dem am Schalthebel (2) befestigten Schalter (16) das Fahrprogramm « maximal zulässige Motordrehzahl » einschaltbar ist.

9. Getriebesteuerung nach Anspruch 8, dadurch gekennzeichnet, daß der Schalter (16) als Taster ausgebildet ist und nach seiner Betätigung auf das am Fahrprogrammwähler (5) eingestellte Fahrprogramm zurückgeschaltet wird.

10. Getriebesteuerung nach einem oder mehreren der Ansprüche 1 bis 9, dadurch gekennzeichnet, daß die mit dem Schalthebel (2) einstellbaren Gänge linear hintereinander angeordnet sind und durch Rasten markiert sind.

**Claims**

1. Semi-automatic transmission control system for multi-step gear transmissions, especially for heavy goods vehicles, having a gear lever (2) for engaging the gears, a gear sensor (21) for identifying the gear engaged and for electronically encoding this gear, and having an evaluator circuit (3) which effects the servo-assisted engagement of the gears in the transmission, and having a locking device (1) for the gear lever (2), characterised by the following features :

a) a gear position indicator (7) for monitoring the gear changing,

b) a sensor (8) for picking up the transmission output speed,

c) an electronic unit (4), assigned to the evaluator circuit (3), of which the inputs (9, 10) receive signals relating to the drive condition by means of the gear position indicator (7) and the sensor (8) and of which the output (11) operates the locking device (1) when the output signals of the gear sensor (21) and the sensor (8) correspond to a motor speed that lies outside an optimum motor speed range predetermined by the electronic unit, the locking device (1) holding the gear lever in a gear position determined by the electronic unit (4) and the optimum gear assigned to that gear position being engaged.

2. Transmission control system according to claim 1, characterised in that the locking device (1) has the following features :

a) a disc (12) that is attached to the gear lever (2) and has notches (14) at its rim,

b) a pressure medium-operated, springloaded working cylinder (13) for inserting a pin (15) into the notches (14).

3. Transmission control system according to claim 2, characterised in that instead of the working cylinder (13) there is used a working magnet.

4. Transmission control system according to claim 1, characterised in that the operation of the locking device (1) can be switched off by means of a switch (16) attached to the gear lever (2).

5. Transmission control system according to claim 1, characterised in that a further input (20) of the electronic unit (4) is connected to a driving program selector (5) by means of which various driving programs stored in the electronic unit (4) can be selected.

6. Transmission control system according to claim 5, characterised in that the driving programs that can be selected are « brisk », « economical », « empty », « laden » and/or « maximum permissible motor speed ».

7. Transmission control system according to claims 1 to 4, characterised in that the electronic unit (4) is supplied with information relating to the load and the accelerator pedal position by means of further inputs (23, 24).

8. Transmission control system according to one or more of claims 1 to 7, characterised in that the driving program « maximum permissible motor speed » can be selected by means of the switch (16) attached to the gear lever (2).

9. Transmission control system according to claim 8, characterised in that the switch (16) is constructed in the form of a button and, after being operated, is switched back to the driving program set on the driving program selector (5).

10. Transmission control system according to one or more of claims 1 to 9, characterised in that the gears that can be engaged using the gear lever (2) are arranged linearly one behind the other and are marked by detents.

**Revendications**

1. Commande de transmission semi-automatique de réducteurs, pour poids lourds en particulier, avec un levier de vitesses (2) pour le choix des rapports, un détecteur (21) de position du levier pour identification du rapport choisi et codage électronique de ce dernier, un circuit traducteur (3) produisant le passage servo-assisté des rapports dans la boîte et un verrouillage (1) du levier de vitesses (2), ladite commande étant caractérisée par :

a) un répéteur de rapport (7) pour contrôle du changement de rapport ;

b) un capteur (8) déterminant la vitesse de rotation de sortie de la boîte ;

c) une électronique (4) affectée au circuit traducteur (3) et dont les entrées (9, 10) reçoivent du répéteur de rapport (7) et du capteur (8) des signaux sur l'état de la transmission, et dont la sortie (11) actionne le verrouillage (1) quand les signaux de sortie du détecteur (21) de position du levier et du capteur (8) correspondent à un régime moteur extérieur à une plage optimale de régime moteur déterminée par l'électronique, le verrouillage (1) bloquant le mouvement du levier de vitesses dans une position déterminée par l'électronique (4) et le rapport optimal correspondant à ladite position étant alors passé.

2. Commande de transmission selon revendication 1, caractérisée en ce que le verrouillage (1) comporte :

a) un disque (12) fixé sur le levier de vitesses (2) et dont le bord présente des encoches (14) ; et

b) un vérin (13) à fluide de pression et ressort de charge pour l'engagement d'une broche (15) dans les encoches (14).

3. Commande de transmission selon revendication 2, caractérisée par l'emploi d'un électro-aimant à la place du vérin (13).

4. Commande de transmission selon revendication 1, caractérisée en ce qu'un interrupteur (16) fixé sur le levier de vitesses (2) permet de couper la fonction du verrouillage (1).

5. Commande de transmission selon revendication 1, caractérisée en ce qu'une autre entrée (20) de l'électronique (4) est reliée à un sélecteur de programme de marche (5), permettant de sélecter divers programmes de marche mémorisés dans l'électronique (4).

6. Commande de transmission selon revendication 5, caractérisée en ce que les programmes de marche « nerveux », « économique », « vide » « chargé » et/ou « régime moteur maximal admissible » sont sélectables.

7. Commande de transmission selon revendications 1 à 4, caractérisée en ce que des informations relatives à la charge et à la position de la pédale d'accélérateur sont transmises à l'électronique (4) par d'autres entrées (23, 24).

8. Commande de transmission selon une quelconque des revendications 1 à 7, caractérisée en ce que l'interrupteur (16) fixé sur le levier de vitesses (2) permet de brancher le programme de marche « régime moteur maximal admissible ».

9. Commande de transmission selon revendication 8, caractérisé en ce que l'interrupteur (16) est réalisé sous forme d'une touche dont la libération rebranche le programme ajusté sur le sélecteur de programme de marche (5).

10. Commande de transmission selon une quelconque des revendications 1 à 9, caractérisée en ce que les rapports sélectables par le levier de vitesses (2) sont disposés linéairement côte à côte et repérés par des encoches.